Europäisches Patentamt

European Patent Office

Office européen des brevets

(19)

(11) Numéro de publication: **0 041 409**

**A1**

(12)

# DEMANDE DE BREVET EUROPEEN

(21) Numéro de dépôt: **81400434.7**

(22) Date de dépôt: **20.03.81**

(51) Int. Cl.³: **G 11 B 5/22**
**G 11 B 5/12**

(30) Priorité: **02.04.80 FR 8007454**

(43) Date de publication de la demande:
**09.12.81 Bulletin 81/49**

(84) Etats contractants désignés:
**DE GB IT NL SE**

(71) Demandeur: **COMPAGNIE INTERNATIONALE POUR L'INFORMATIQUE CII - HONEYWELL BULL (dite CII-HB)**
**94, avenue Gambetta**
**F-75020 Paris(FR)**

(72) Inventeur: **Desserre, Jacques**
**12 bis, rue de la Mairie**
**Orcemont F-78120 Rambouillet(FR)**

(72) Inventeur: **Helle, Michel**
**33 Grande rue**
**Marcq F-78770(FR)**

(72) Inventeur: **Lazzari, Jean-Pierre**
**29 rue André Thomas**
**F-78490 Montfortl'Amaury(FR)**

(74) Mandataire: **Gouesmel, Daniel**
**94, avenue Gambetta**
**F-75020 Paris(FR)**

(54) **Transducteur magnétique pour la lecture ou l'écriture des informations d'un support magnétique.**

(57) Transducteur de lecture et/ou d'écriture d'un support magnétique d'informations contenues à l'intérieur d'une pluralité de pistes comprenant un circuit magnétique formé de deux pièces polaires réunies par un entrefer (GI) et un bobinage (BOBI) couplé magnétiquement à ce circuit.

Le transducteur est caractérisé en ce qu'il comprend des moyens (MCF1, MCF2) associes aux pièces polaires situées de chaque côté de l'entrefer, considéré dans le sens de sa grande dimension, pour canaliser le flux magnétique émis par l'environnement magnétique immédiat de la piste du support lue par le transducteur.

Applicable à la lecture et l'enregistrement d'informations sur supports magnétiques.

FIG.5c

EP 0 041 409 A1

**0041409**

2399

TRANSDUCTEUR MAGNETIQUE DE LECTURE ET/OU D'ENREGISTREMENT
D'INFORMATIONS CONTENUES SUR UN SUPPORT MAGNETIQUE .

La présente invention concerne les transducteurs magnétiques . Elle est notamment applicable à la lecture et/ou
l'écriture des informations contenues sur les supports
magnétiques d'enregistrement, tels que les disques magnétiques , rigides ou souples et les bandes .

On sait, que pour enregistrer (on dit encore écrire)
des informations sur un support magnétique d'enregistrement, on crée sur(ou dans) ce support, en une pluralité
d'endroits parfaitement déterminés de celui-ci , au moins
une modification de l'une de ses propriétés magnétiques,
ce qui se traduit par au moins une variation de la grandeur physique qui caractérise ladite propriété . La lecture de ces informations s'effectue en détectant ces modifications , en transformant la variation de la grandeur
physique définie plus haut en une variation d'une autre
grandeur physique qui est le plus souvent une variation de
la tension ou du courant d'un signal électrique .

Pour mieux comprendre l'objet de l'invention, il est
nécessaire de faire les quelques rappels de magnétisme
suivants :

-pour magnétiser (on dit également aimanter) , un matériau magnétique à l'intérieur duquel l'induction magnétique
est faible, on le soumet d'abord à un champ magnétique positif $H_s$ dont l'intensité est suffisante pour que le matériau soit saturé , c'est-à-dire que l'induction magnétique dans le matériau atteigne une valeur limite $B_s$. On
annule le champ magnétique extérieur. Il subsiste alors
dans le matériau une induction magnétique non nulle appelée
"induction rémanente" $B_r$, caractéristique du matériau . On
appelle "perméabilité magnétique initiale du matériau"
le rapport B/H entre l'induction et le champ magnétique
lorsque l'on fait tendre le champ H vers zéro, et ce sur la courbe de première aimantation .

On rappelle d'autre part qu'un matériau magnétiquement anisotrope, présente deux directions privilégiées de magnétisation (ou d'aimantation) perpendiculaires l'une à l'autre .
L'une d'elles est appelée "direction de facile aimantation"
alors que l'autre est appelée "direction de difficile aimantation " .La perméabilité initiale du matériau dans la direction
de difficile aimantation est très supérieure à la perméabilité initiale du matériau dans la direction de facile aimantation . La propriété magnétique utilisée pour enregistrer
des informations sur un support magnétique est définie par
exemple soit par l'absence ou la présence d'une induction
magnétique rémanente, soit par une variation quelconque
de l'aimantation .

On sait que les disques magnétiques portent les informations
sur des pistes d'enregistrement concentriques circulaires
qui ont une largeur radiale n'excédant pas quelques centièmes de millimètres et couvrent généralement la majeure partie
de leurs deux faces .

Les bandes magnétiques portent les informations sur des pistes
parallèles à la longueur de la bande .

Les moyens les plus fréquemment utilisés , qui permettent ,
soit d'enregistrer des informations sur des supports
tels que les disques ou les bandes, soit de les lire soit
enfin de réaliser l'une ou l'autre de ces deux fonctions,
sont appelés " transducteurs magnétiques ".Généralement, on associe à un support d'enregistrement un ou plusieurs transducteurs, le support défilant devant celui-ci ou ceux-ci .
Pour simplifier, on supposera dans la suite de la description,
qu'un seul transducteur est associé à un même support .

Un transducteur magnétique comprend un circuit magnétique,
autour duquel est disposé un enroulement , et qui comporte un
entrefer . Ce dernier est disposé à une distance très faible de la surface du support, comprise entre zéro et quelques dixièmes de microns .

L'enroulement comprend les fils électriques d'entrée et/ou sortie . Pour enregistrer des informations sur le support associé au transducteur, on alimente l'enroulement par un courant électrique dont on peut faire varier le sens ou la durée de passage dans celui-ci . Le support est ainsi soumis au champ magnétique d'intensité, de sens variables créé par le transducteur au voisinage immédiat de son entrefer ( entre zéro et quelques dixièmes de microns) , ce qui crée sur chaque piste du support une succession de petits domaines magnétiques qui ont des inductions magnétiques de sens opposé et dont la dimension est liée à la densité longitudinale d'enregistrement (pour un disque magnétique on appelle densité longitudinale le nombre de domaines magnétiques par unité de longueur mesurée suivant la circonférence de la piste). Ces domaines également appelés "domaines magnétiques élémentaires " sont répartis sur toute la longueur de la piste .

Inversement, lorsque les informations d'un support donné défilent devant l'entrefer du transducteur qui lui est associé, ce dernier délivre des signaux électriques de lecture par l'intermédiaire de ses fils électriques d'entrée et / ou sortie , signaux qui sont envoyés à des circuits électroniques de lecture associés aux transducteurs .

La tendance actuelle du développement des transducteurs magnétiques est de produire suivant la technique de fabrication des circuits intégrés, des transducteurs de dimensions de plus en plus faibles (par exemple avec des entrefers dont les dimensions sont de l'ordre de un à quelques dixièmes de microns) , de tels transducteurs étant par exemple fabriqués par la Compagnie Internationale pour l'Informatique CII-Honeywell Bull. et décrit dans les brevets français N° 2.063.693 déposée le 28 Octobre 1969 par la Compagnie Internationale pour l'Informatique et le Commisariat
à l'Energie Atomique sous le titre : " Tête magnétique
intégrée et procédé de fabrication de ladite tête" et
le brevet N° 2.209.154 déposé le 3 juillet 1972 par la
Compagnie Internationale pour l'Informatique sous le
titre : " Transducteurs magnétiques perfectionnés et leur
procédé de fabrication" .

Un tel transducteur comprend :
- d'une part, un circuit magnétique formé de deux pièces
polaires en couches minces , réunies à une extrémité de
manière à ce qu'elles soient couplées magnétiquement ,
et disposées à l'autre extrémités voisines du support
d'enregistrement associé au transducteur de façon à former
un entrefer . Ce dernier a une forme voisine de celle d'un
rectangle et sa grande dimension est de l'ordre de la
largeur radiale des pistes du support . Celui-ci est
sensiblement perpendiculaire aux pièces polaires . L'une
de celles-ci est disposée sur un substrat en matière isolante .

- d'autre part, un bobinage électrique formé de couches
minces conductrices qui sont superposées dans ⊥ une direction perpendiculaire au plan des pièces polaires ,
et séparées les unes des autres par des couches minces électriquement isolantes (on rappelle que l'on désigne habituellement sous le nom de"couches minces " , des couches dont
l'épaisseur est de l'ordre de quelques angströms à quelques microns). Une partie du bobinage est comprise entre
les deux pièces polaires de telle sorté qu'on peut dire que
ces dernières forment une enveloppe de cette partie du
bobinage .

Le support d'enregistrement magnétique associé au transducteur défile devant celui-ci perpendiculairement au plan des
pièces polaires , perpendiculairement à la grande dimension
de l'entrefer .

Dans la pratique courante, le matériau magnétique constituant les pièces polaires est de préférence anisotrope et son axe de difficile aimantation est dirigé perpendiculairement au support d'enregistrement .

On considère que chaque pièce polaire a une forme sensiblement rectangulaire.Sa plus grande dimension est normale au support d'enregistrement . L'axe de difficile aimantation du matériau magnétique constituant chaque pièce polaire est tel qu'il a même direction que la plus grande dimension de celle-ci .

On sait que les domaines magnétiques élémentaires constituant les informations d'une piste du support magnétique d'enregistrement produisent un flux magnétique de fuite au voisinage immédiat de la surface du support . Ce flux magnétique est capté par l'entrefer du transducteur magnétique intégré qui lui est associé .

Si on désigne par $\phi_t$ le flux magnétique qui pénètre dans l'entrfer du transducteur, et $\phi_m$ le flux magnétique qui traverse le bobinage de celui-ci et permet donc d'engendrer un signal de lecture, on définit le coefficient de transfert T du transducteur magnétique intégré par la relation $T = \phi_m / \phi_t$ . Pour que ce coefficient de transfert soit le plus grand possible, on montre que l'une des conditions à satisfaire est d'avoir une forte perméabilité des couches minces magnétiques constituant les pièces polaires et ce dans le sens de la circulation du flux . On voit que l'utilisation d'un matériau magnétique anisotrope dont l'axe de difficile aimantation est dirigé perpendiculairement au support d'enregistrement permet la réalisation de cette condition .

Les avantages d'un transducteur magnétique intégré dont les pièces polaires sont constituées d'un matériau magnétique anisotrope , transducteur décrit ci-dessus , sont exposés plus en détail dans le brevet 2.063.693 précité . On peut apporter des perfectionnements à de tels transducteurs de la manière décrite dans le brevet français N° 2.297.475

0041409

déposé le 10 Janvier 1975 par la Compagnie Internationale pour l'Informatique sous le titre : " Perfectionnements apportés aux structures de têtes magnétiques du type dit intégrées" .Ces perfectionnements permettent d'accroî - tre aussi bien le rendement de ces transducteurs à l'écriture qu'à la lecture . On rappelle que le rendement à l'écriture est défini comme le rapport entre le flux magnétique crée par le transducteur au voisinage de l'entrefer et le courant d'écriture traversant le bobinage , et que le rendement à la lecture est le rapport entre la tension disponible aux bornes du bobinage et le flux magnétique qui pénètre dans le transducteur au niveau de l'entrefer . Un transducteur intégré décrit dans le brevet N° 2.297.475 précité , comporte des pièces polaires qui présentent un rétrécissement au niveau de l'entrefer . La longueur du rétrécissement des pièces polaires dans un plan parallèle au support d'enregistrement et disposé en regard de celui-ci est égal à la grande dimension de l'entrefer . Elle est alors appelée "largeur de piste géométrique $LP_g$". Pour réaliser ce rétrécissement, les pièces polaires sont usinées par attaque ionique , sur une profondeur d'atta- que égale à $p_a$ ($p_a$ est de l'ordre de quelques microns) ce qui définit des surfaces latérales concaves des pièces polaires dénommées $S_2 - S_3$ , $S'_2 - S'_3$ respectivement situées de part et d'autre de l'entrefer . La surface des pièces polaires au niveau de l'entrefer , dans le plan de celui-ci , de lar- geur $LP_g$ et qui est parallèle au support d'enregistrement , est désigné par $S_1$. Si L est la largeur des pièces polaires (petite dimension de ces pièces ) avant usinage par attaque ionique , on a généralement $L/LP_g$ sensiblement égal à 2 .

A la lecture, on considère par exemple une piste déterminée P d'un disque magnétique d'axe de symétrie circulaire $Ax_p$ supposée isolée, et trois positions différentes que peut occuper le transducteur par rapport à cette piste , qui sont définies comme suit :

- dans la position $POS_0$ , l'entrefer du transducteur est parfaitement centré en regard de la piste : cela signifie que quelquesoit le domaine magnétique élémentaire de la piste envisagée, l'axe $Ax_p$ de la piste en ce domaine et l'axe de symétrie $Ax_E$ de l'entrefer normal au plan des pièces polaires, sont alors situés dans un même plan normal au support , et sont parallèles entre eux .

Dans cette position, la tension du signal de lecture recueilli aux bornes du bobinage du transducteur est la plus grande possible, soit A ;

Dans les positions $POS_1$ et $POS_2$ symétriques par rapport à $POS_0$ (l'axe $Ax_E$ de symétrie de l'entrefer est décalé d'une meme distance par rapport à l'axe $Ax_p$) , la tension du signal recueilli aux bornes du bobinage est nulle .

Par définition, on appelle largeur de piste $LP_L$ à la lecture, la moitié de la largeur de l'espace situé de part et d'autre de la position $POS_0$ pour laquelle la tension du signal délivré par le bobinage est supérieure ou égale à 5% de A.

Dans la pratique courante, on constate que $LP_L$ est sensiblement supérieure à $LP_E$ : en effet, au signal de lecture des informations de la piste P peut se superposer un autre signal, que la piste P soit isolée ou non.

Pour mieux comprendre les raisons de ce phénomène, il est nécessaire de rappeler les faits suivants :

- lors d'une première opération d'écriture d'une piste P d'un support d'enregistrement par le transducteur intégré qui lui est associé, le transducteur occupe par exemple la position $POS_0$ définit plus haut. L'axe de symétrie circulaire de la piste P alors écrite est appelé $Ax_p$ . Si on suppose la piste P non isolée , on désigne par P' et P" les pistes adjacentes de la piste P écrites sur le support par le transducteur .

- lors d'une seconde opération d'écriture d'une même piste P, le transducteur occupe une position $POS'_0$ , très voisine

mais différente de $POS_0$ (le décalage $\delta$ entre ces deux positions est dans la pratique de l'ordre de quelques microns) . Ceci est dû au fait que la précision du système de positionnement du transducteur en regard du support d'enregistrement a une limite maximum donnée égale au décalage $\delta$ , en de çà de laquelle il est impossible d'aller . La nouvelle piste P écrite a donc un axe magnétique $Ax'_p$ décalé de $\delta$ par rapport à $Ax_p$ .

Il est clair de même que les deux pistes adjacentes P' et P" occupent sur le support une position légèrement différente que celle qu'elles occupaient à la suite de la première opération d'écriture .

Il existe donc de part et d'autre de la nouvelle piste P d'axe de symétrie circulaire $Ax'_p$, une zone dont la largeur est sensiblement égale au décalage $\delta$ , qui contient des informations magnétiques ayant la mémoire de l'état antérieur du support , c'est-à-dire de l'état que celui-ci avait , par exemple, à la suite de la première opération de lecture .

On appelle "environnement immédiat de la piste P", l'ensemble constitué par les informations de la zone de largeur $\delta$ et celles des deux pistes voisines P' et P".

Le fait que la largeur de piste lue $LP_L$ est supérieure à la largeur d'écriture $LP_E$ est dûe essentiellement au phénomène suivant : si, lors de l'écriture, le flux magnétique crée par le transducteur permettant l'écriture des informations sur le support passe essentiellement par la surface $S_1$ (une petite partie de ce flux passe par les surfaces latérales concaves $S_2 - S_3 - S'_2 - S'_3$) , en revanche, lors de la lecture les surfaces latérales concaves $S_2$ et $S_3$, $S'_2$ et $S'_3$ captent une grande partie du flux magnétique produit par l'environnement magnétique immédiat de la piste P. On montre que la raison principale de ce phénomène provient de la forte anisotropie du matériau magnétique constituant les pièces polaires du transducteur .

9

Le signal délivré par le bobinage du transducteur provenant du flux magnétique produit par les informations de la piste P est appelé "signal utile S" , alors que le signal délivré par ce même bobinage provenant du flux magnétique produit par l'environnement magnétique immédiat de la piste P est appelé "signal parasite ou signal de bruit B" .

Dans la pratique courante, le rapport signal utile/ signal de bruit S/B d'un tel transducteur peut être estimé trop faible , particulièrement pour certaines applications, notamment lorsque le nombre de pistes du support par unité de longueur est grand (pour un disque magnétique ce nombre est appelé "densité radiale " ).

La présente invention permet de remédier à cet inconvénient en diminuant le bruit B de façon importante, et de ce fait en améliorant le rapport S/B ; ceci est obtenu par le dépôt sur les surfaces $S_2 - S_3$, $S'_2 - S'_3$ , situées de part et d'autre de l'entrefer , d'une couche de matériau magnétique couplée magnétiquement partiellement ou non avec les pièces polaires et dont le rôle est de canaliser les lignes de flux magnétique provenant de l'environnement magnétique immédiat de la piste P de telle sorte que ce flux ne traverse pas le bobinage du transducteur .

Selon l'invention, le transducteur de lecture et/ou d'écriture d'un support magnétique d'informations qui défile devant lui , les informations étant contenues à l'intérieur d'une pluralité de pistes, comprenant :
- un circuit magnétique formé de deux pièces polaires séparées par un entrefer parallèle au support, dont la grande dimension est perpendiculaire au sens de défilement des informations des pistes,
- un bobinage couplé magnétiquement à ce circuit, est caractérisé en ce qu'il comprend des moyens associés aux pièces polaires, situés de chaque côté de l'entrefer considéré dans le sens de sa grande dimension , pour canaliser le flux magnétique émis par l'environnement magnétique immédiat du support d'enregistrement lu par le transducteur , de telle sorte que celui-ci ne traverse pas le dit bobinage .

Dans une forme de réalisation préférée de l'invention le transducteur est intégré . Ses pièces polaires sont faites de couches minces magnétiques superposées . Ces pièces polaires sont couplées magnétiquement à une extrémité et forment l'entrefer à l'autre extrémité voisine du support . Le plan des pièces polaires est sensiblement perpendiculaire au support . Celles-ci présente un rétrécissement de largeur $LP_g$ au niveau de l'entrefer . Celui-ci définit des parois latérales des pièces polaires , de part et d'autre de l'entrefer considéré selon sa grande dimension . Ces parois latérales ont la forme de surfaces latérales concaves $S_2$-$S_3$, $S'_2 - S'_3$. Ce transducteur est caractérisé en ce que les moyens de canalisation du flux magnétique sont constitués par des couches minces magnétiques déposées sur les surfaces $S_2 - S_3$, $S'_2 - S'_3$ , et qui sont magnétiquement couplées partiellement ou non aux pièces polaires .

On montre qu'un tel transducteur selon l'invention permet d'obtenir une largeur de piste à la lecture $LP_L$ sensiblement égale à la largeur d'écriture $LP_E$ , et d'améliorer le rapport Signal/Bruit.

D'autres caractéristiques et avantages de la présente invention apparaîtront dans la description suivante donnée à titre d'exemple non limitatif et en se référant aux figures annexées .

Sur ces dessins :
- la figure 1, rappelle comment est constitué un transducteur magnétique intégré de lecture et/ou d'écriture d'informations contenues sur un support, selon l'art antérieur tel que décrit dans les deux brevets N° 2.063.693 et 2.209.154 précités ;
- les figures 1a et 1b, étant des vues de trois-quarts en perspective ;
- la figure 1c, étant une vue en coupe selon un plan perpendiculaire au support et parallèle au sens de défilement de celui-ci ;

- la figure 2, montre une forme de réalisation préférée d'un transducteur magnétique intégré selon l'art antérieur tel que décrit dans le brevet 2.297.475 précité, les pièces polaires de ce transducteur comportant un rétrécissement au niveau de l'entrefer ;

- la figure 2a, étant une vue de trois-quart en perspective ;

- la figure 2b, étant une vue de dessus des pièces polaires ;

- la figure 3, est un ensemble de figures 3a, 3b et 3c qui définissent chacune respectivement la largeur de piste géométrique $LP_G$, la largeur de piste à l'écriture $LP_E$, la largeur de piste à la lecture $LP_L$.

- la figure 4, permet de mieux comprendre comment est constituer l'environnement magnétique immédiat d'une piste P d'un support d'enregistrement tel qu'un disque magnétique ;

- la figure 5, représente un mode de réalisation préférée d'un transducteur magnétique intégré selon l'invention ;

- la figure 5a, étant une vue de dessus des pièces polaires du transducteur , prises au niveau de l'entrefer ;

- la figure 5b, étant une vue de côté des mêmes pièces polaires prises au niveau de l'entrefer ;

- la figure 5c, étant une vue de trois-quart  en perspective;

- la figure 6, montre le chemin suivi par les lignes de flux magntiques émis par les informations du support d'enregistrement à travers le transducteur selon l'invention , lorsque ce dernier lit ces informations en étant décalé    par rapport à l'axe de la piste lue .

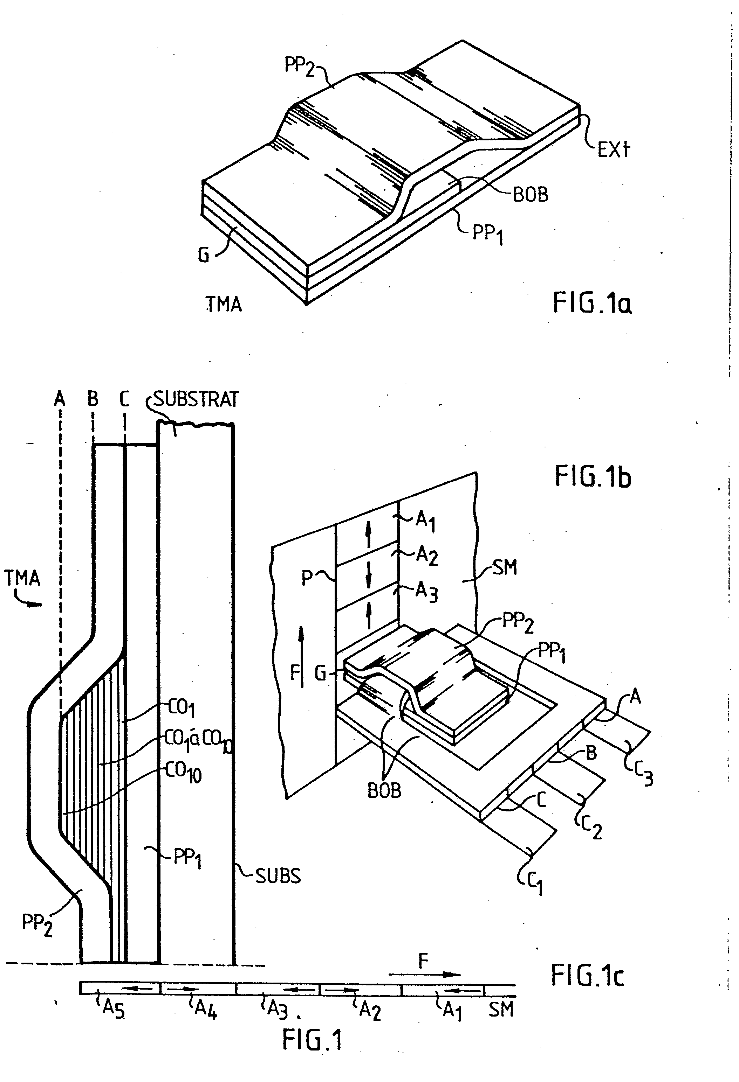

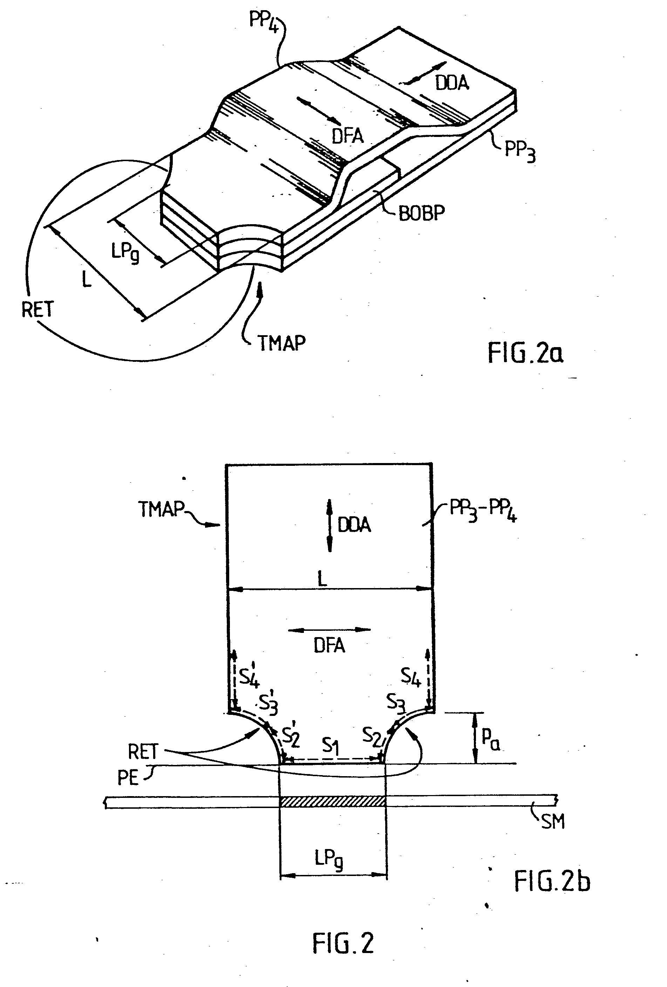

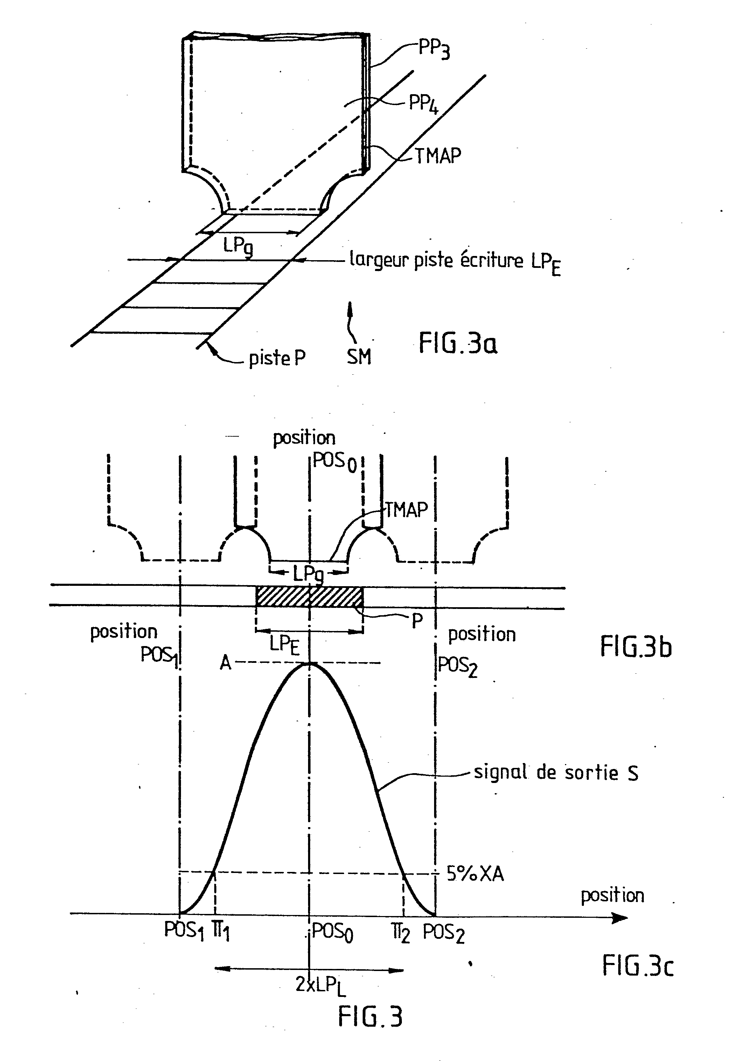

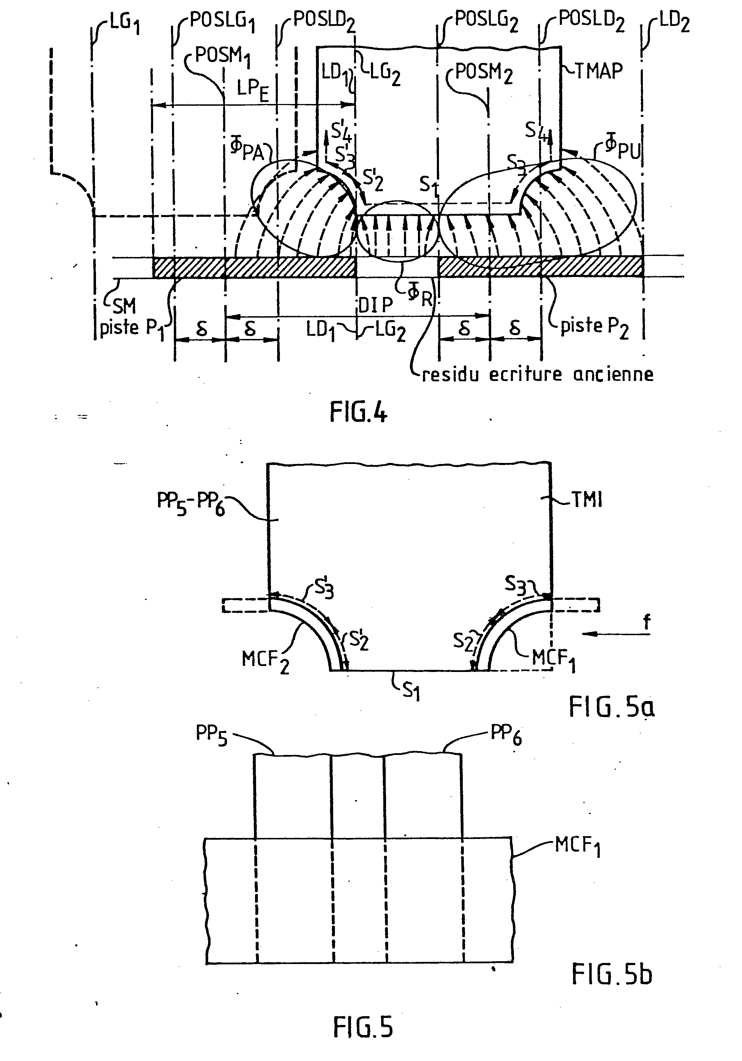

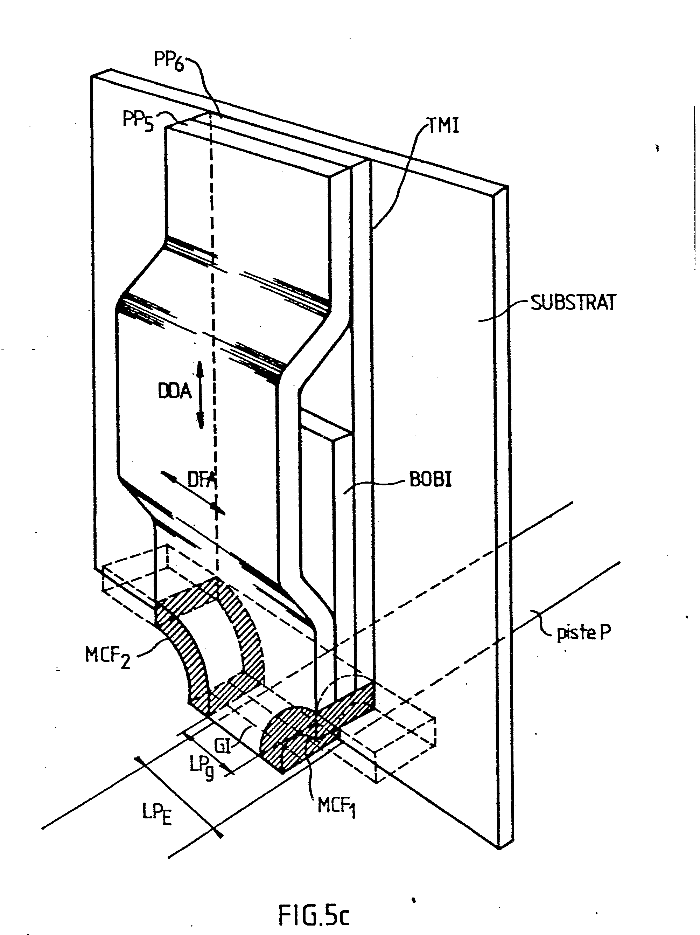

Afin de mieux comprendre comment est constitué  le transducteur magnétique intégré selon l'invention, il est utile de faire quelques rappels , d'une part , sur les transducteurs magnétiques intégrés selon l'art antérieur, illustrés par les figures 1a, 1b ,1c, 2a et 2b, et d'autre part sur les inconvénients que ceux-ci présente à la lecture des informations, illustrés par les figures 3a, 3b,3c  et 4.

On rappelle que de tels transducteurs magnétiques intégrés ont déjà été décrits dans les trois brevets français précités N° 2.063.693, 2.209.154 et 2.297.475.

Ainsi qu'on peut le voir aux figures 1a à 1c, un transducteur magnétique intégré selon l'art antérieur TMA comprend , un circuit magnétique formé de deux pièces polaires magnétiques en couches minces $PP_1$ et $PP_2$ entièrement superposées et couplées magnétiquement à un bobinage BOB . Les pièces polaires $PP_1$ et $PP_2$ sont couplées magnétostatiquement entre elles en une première extrémité EXT et forment l'entrefer G à une autre extrémité . La pièce polaire $PP_1$ est déposée sur un substrat SUBS en matière isolante ainsi qu'on peut le voir à la figure 1c.

Aux figures 1b et 1c, le tranducteur TMA est représenté disposé en regard d'un support d'enregistrement SM dont on n'a représenté qu'une partie pour simplifier . Ce support compor-te une pluralité de pistes d'enregistrement dont on ne montre que la piste P, laquelle comprend une pluralité de domaines magnétiques élémentaires dont seuls trois sont représentés à savoir les domaines $A_1$, $A_2$ et $A_3$ sur la figure 1b et cinq à savoir ,$A_1$ à $A_5$ à la figure 1c . Le support SM qui défile dans le sens de la flèche F est par exemple un disque magnétique appartenant à une mémoire à disques. On sait que les mémoires à disques sont de plus en plus utilisées dans les systèmes de traitement de l'information en raison de leur capacité de stockage et du temps relativement court mis par les transducteurs décriture et/ou lecture à accéder à une information contenue en un point quelconque du disque à partir du moment où ils reçoivent dudit système de traitement l'ordre d'accéder à cette information.

Les pièces polaires $PP_1$ et $PP_2$ sont généralement constituées d'un ensemble de plusieurs couches minces magnétiques et de couches minces isolantes empilées, chaque couche magnétique étant séparée de la couche voisine par une couche isolante . L'ensemble ainsi défini , qu'il comprenne une ou plusieurs couches minces magnétiques est désigné habituellement sous le nom général de "couches minces magnétiques" .

Le bobinage BOB est formé d'une succession de couches minces conductrices et isolantes empilées selon une direction perpendiculaire au plan des pièces polaires magnétiques $PP_1$ et $PP_2$ , une partie des couches minces conductrices et isolantes affleurant dans l'entrefer G . Les couches isolantes sont disposées entre les couches conductrices . Pour simplifier la figure 1c , on n'a représenté que les couches conductrices,à savoir $CO_1$ à $CO_{10}$ dans l'exemple de réalisation représenté sur cette même figure . Ces couches conductrices qui ont la même forme et sont de dimension différente sont reliées entre elles par des éléments conducteurs de raccordement non représentés, pour simplifier , aux figu- res 1a et 1c .

Dans la pratique courante, le bobinage BOB comporte un point milieu B , ses extrémités respectives étant C et A . De façon connue, dans une mémoire à disques comportant plusieurs transducteurs associés à plusieurs disques, on sélectionne tout transducteur dont on veut qu'il effectue une opération de lecture en envoyant une impulsion électrique de sélection sur son point milieu B.

Le bobinage BOB comporte trois conducteurs de sortie à savoir les conducteurs $C_1$, $C_2$, $C_3$ ( figure 1b) , qui sont raccordés aux circuits électroniques de lecture et/ou d'écriture de la mémoire à disques contenant le disque SM.

Dans la pratique courante, on réalise, de préférence, les transducteurs magnétiques intégrés de la manière représentée aux figures 2a et 2b ( voir brevet N° 2. 297.475) .

Ainsi qu'on peut le voir sur ces mêmes figures, qui représentent un tel transducteur TMAP , les pièces polaires $PP_3$ et $PP_4$ de ce dernier sont réalisées en un matériau magnétiquement anisotrope dont l'axe de difficile aimantation est orienté suivant la direction DDA perpendiculaire au support magnétique SM,qui reste tangente à la surface des pièces polaires. L'axe de facile aimantation des pièces polaires $PP_3$ et $PP_4$ est orienté selon la direction DFA perpendiculaire à la direction de difficile aimantation DDA et parallèle au support d'enregistrement SM . Il est clair que l'axe de facile aimantation est également tangent à la surface des pièces polaires $PP_3$ et $PP_4$.

Le transducteur TMAP comprend , au niveau de son entrefer GP, un rétrécissement RET de profondeur d'attaque $p_a$, généralement de l'ordre de 5 à 6 microns . Ce rétrécissement est tel que la longueur de l'entrefer $LP_g$ est sensiblement inférieur à la largeur L des pièces polaires en dehors de ce rétrécissement , c'est-à-dire la largeur des pièces polaires avant usinage . Ainsi qu'il a été dit plus haut, dans la pratique courante, le rapport $L/LP_g$ est de l'ordre de 2. Ainsi qu'on peut le voir à la figure 2b, le rétrécissement RET permet de définir les surfaces latérales concaves des pièces polaires $S_2 - S_3$, $S'_2 - S'_3$ . La surface $S_2$ $(S'_2)$ est telle que l'angle qu'elle fait avec la normale au support SM est très faible alors que l'angle que fait la surface $S_3$ $(S'_3)$ avec cette même normale au support d'enregistrment est plus grande et approche 90°.

On montre , dans le brevet français N° 2. 297.475 précité, qu'un tel transducteur TMAP présentant un rétrécissement RET permet d'enregistrer sur le support SM des pistes d'enregistrement P de largeur $LP_E$ définie   avec une grande précision .

Ainsi qu'on peut le voir aux figures 2b et 3a, cette dernière étant une vue de trois-quart  en perspective montrant la partie des pièces polaires   la plus proche d'un support d'enregistrement SM , le transducteur TMAP étant montré au-dessus d'une piste d'enregistrement P de ce support , la largeur de piste à l'écriture $LP_E$ est sensiblement égale ou légèrement supérieure à la largeur de piste géométrique $LP_g$ du transducteur TMAP (longueur de l'entrefer G ) . Ceci est dû a une grande concentration des lignes de flux au niveau de l'entrefer  liée à l'anisotropie des pièces polaires et donc à la forte perméabilité magnétique suivant la direction DDA.

On designera par la suite sous le nom de $S_1$ la surface des pièces polaires dans le plan de l'entrefer GP , ce dernier qui est désigné par PE, étant parallèle au support d'enregistrement SM.

Les figures 3b et 3c permettent de mieux comprendre la définition de la largeur de piste à la lecture $LP_L$.

Dans la position $POS_0$, où l'entrefer GP du transducteur TMAP est parfaitement centré au-dessus de la piste P de largeur $LP_E$ supposée isolée (on voit que les axes de symétrie , contenus dans le plan de la figure, des pièces polaires du transducteur et de la piste P sont confondus) le signal délivré par le transducteur a une tension maximum A. Dans la position $POS_1$, la tension du signal délivré par le transducteur TMAP est nulle et il en est de même lorsque le transducteur occupe la position $POS_2$ symétrique de la position $POS_1$ par rapport à la position $POS_0$.

Lorsque le transducteur TMAP occupe une position comprise entre les positions $\pi'_1$ et $\pi'_2$ pour lesquelles le signal délivré est égal ou supérieur à 5% de A, on dit par définition que la distance entre les positions $\pi'_1$ et $\pi'_2$ est égale à $2 \times LP_L$.

Ainsi qu'il a été mentionné plus haut, le principal inconvénient d'un tel transducteur TMAP est que la largeur de lecture $LP_L$ est supérieure à la largeur d'écriture $LP_E$ (et par conséquent la largeur de piste géométrique $LP_g$) . Les raisons en apparaîtront plus clairement au regard de la figure 4 .

On considère sur le support magnétique d'enregistrement SM (supposé être un disque ) une piste $P_1$ et une piste $P_2$. On suppose pour simplifier que la largeur d'écriture de ces pistes , égale à $LP_E$ est égale à la largeur de piste géométrique $LP_g$ du transducteur intégré selon l'art antérieur TMAP. On suppose en outre que chacune des pistes $P_1$ et $P_2$ occupe, en moyenne , les positions $POSM_1$ et $POSM_2$ distantes d'une distance DIP. Ces positions sont symbolisées par les axes de symétrie des pistes $P_1$ et $P_2$ situés dans le plan de la figure (axe perpendiculaire à la surface du disque magnétique SM) . On suppose de plus que ces axes représentent également des positions moyennes occupées par le transducteur TMAP lorsque celui-ci effectue , soit des opérations de lecture, soit des opérations d'écriture . Ces axes représentent donc les axes de symétrie des pièces polaires $PP_3$ et $PP_4$ du transducteur .

Dans la pratique courante, la distance DIP est légèrement supérieure à la largeur de piste à l'écriture $LP_E$. Ainsi pour un disque magnétique dont la densité radiale d'enregistrement est de l'ordre de 240 pistes par centimètre , la distance DIP est de l'ordre de 40 microns , alors que la longueur $LP_E$ est de l'ordre de 30 microns .

Ainsi qu'il a été écrit plus haut, le dispositif de la mémoire à disques qui contient le disque magnétique SM , qui permet de positionner le transducteur TMAP en regard des pistes $P_1$ et $P_2$ (et également de toutes les autres pistes du disque) a une précision $\delta$ de positionnement parfaitement déterminée de l'ordre de quelques microns . Cela signifie que lors des opérations de lecture ou d'écriture de la piste $P_1$, le transducteur magnétique intégré TMAP aura une position comprise entre une position $POSLG_1$ appelée "position limite gauche" et une position $POSLD_1$ appelée " position limite droite" , ces positions $POSLG_1$ et $POSLD_1$ étant symétriques par rapport à la position moyenne $POSM_1$ et éloignées de celle-ci d'une distance $\delta$ . Elles sont également symbolisées par des axes en traits interrompus à la figure 4 .

Lorsque le transducteur TMAP occupe la position limite gauche $POSLG_1$ , le bord gauche de son entrefer occupe une position désignée par $LG_1$, alors que lorsque le transducteur ocuupe la position limite droite $POSLD_1$, le bord droit de son entrefer occupe la position limite droit $LD_1$.

De même, lors des opérations d'écriture ou de lecture de la

piste $P_2$ , le transducteur TMAP occupera une position comprise entre les positions limites gauche et droit $POSLG_2$ et $POSLD_2$ symétriques l'une de l'autre par rapport à la position moyenne $POSM_2$ et éloignées de celle-ci de la distance $\delta$ . Dans ces conditions, le bord gauche de l'entrefer occupe la position $LG_2$ et le bord droit de l'entrefer la position $LD_2$. (voir figure 4) . On admet pour simplifier que les positions du bord de l'entrefer $LD_1$ et $LG_2$ sont pratiquement confondues.

A la figure 4 on a supposé que les pistes $P_1$ et $P_2$ sont écrites lorsque le transducteur TMAP occupe respectivement les positions limites droites $POSLD_1$ et $POSLD_2$ .

On suppose que le transducteur TAMP effectue les opérations de lecture de la piste $P_2$ en occupant la position limite gauche $POSLG_2$, c'est-à-dire la position la plus défavorable pour la lecture de la piste $P_2$.

Dans ces conditions, le flux magnétique qui passe à travers les pièces polaires du transducteur TMAP et donne lieu à un signal de lecture , peut se décomposer en trois parties :
- 1. un flux $\phi_{PU}$, dit flux utile , qui est le flux magnétique de fuit émis par les informations magnétiques de la piste $P_2$ telle qu'elle a été écrite (position $POSLD_2$) ;
- 2. un flux $\phi_R$ dû aux résidus d'écriture d'une piste $P_2$ antérieurement écrite (le transducteur occupant alors une position différente de $POSLD_2$, par exemple la position $POSLG_2$);
- 3. un flux dû à la piste adjacente $P_1$ dénommé $\phi_{PA}$ . Les flux $\phi_R$ et $\phi_{PA}$ qui pénètrent respectivement par les surfaces $S_1$ et $S'_2$, $S'_3$ et $S'_4$ des pièces polaires et par l'entrefer GP du transducteur TMAP constitue un flux parasite $\phi_{PAR} = \phi_{PA} + \phi_R$ émis par l'environnement magnétique immédiat de la piste $P_2$. On peut donc dire que cet environnement est constitué par le résidu d'écriture de la piste $P_2$ antérieurement écrite , et par la piste voisine $P_1$. A ce flux parasite correspond un signal de bruit B . Le flux utile $\phi_{PU}$ donne lieu à un signal de lecture S.

Le but du transducteur magnétique intégré selon l'invention
TMI est d'accroître le rapport Signal /Bruit S/B en canalisant tout ou partie du flux magnétique parasite $\phi_{PAR}$
par des moyens de canalisation de flux disposés de part et
d'autre de l'entrefer , sur les surfaces $S_2 - S_3$, $S'_2 - S'_3$,
de telle sorte que ce flux parasite pénètre le moins possible
dans les pièces polaires du transducteur et par suite dans le
bobinage de celui-ci .

Un tel transducteur selon l'invention TMI est représenté
aux figures 5a , 5b et 5c . Ainsi qu'on peut le voir sur ces
mêmes figures , le transducteur TMI qui comprend un bobinage
BOBI et des pièces polaires $PP_5$ et $PP_6$ son entrefer étant
désigné par GI , comprend des moyens de canalisation de flux
$MCF_1$ et $MCF_2$. Ces moyens sont constitués par des couches
magnétiques , par exemple en fer-nickel Fe-Ni déposées
sur les surfaces latérales concaves du rétrécissement RETI,
à savoir $S_2 - S_3$ et $S'_2 - S'_3$ . et qui sont couplés partiellement ou non avec les pièces polaires ( il est clair que ces couches $MCF_1$ et $MCF_2$ sont également déposées ainsi qu'on peut le
voir clairement aux figures 5a à 5c sur les couches conductrices et isolantes qui sont disposées dans l'entrefer GI
entre les pièces polaires $PP_5$ et $PP_6$) . Les moyens de
canalisation de flux $MCF_1$ et $MCF_2$ peuvent être constitués
d'une seule couche ou de plusieurs couches minces c'est-à-dire
avoir une structure mono-couche ou multi-couches .Elles
peuvent être constituées par un matériau magnétique isotrope
ou anisotrope . Ainsi qu'on peut le voir sur ces même
figures 5a, 5b et 5c, les deux couches $MCF_1$ et $MCF_2$ peuvent
déborder de part et d'autre des pièces polaires $PP_5$ et $PP_6$
dans une direction parallèle au plan du substrat (ainsi qu'il
est indiqué en traits interrompus sur ces mêmes figures) ou dans
une direction perpendiculaire au plan du substrat .

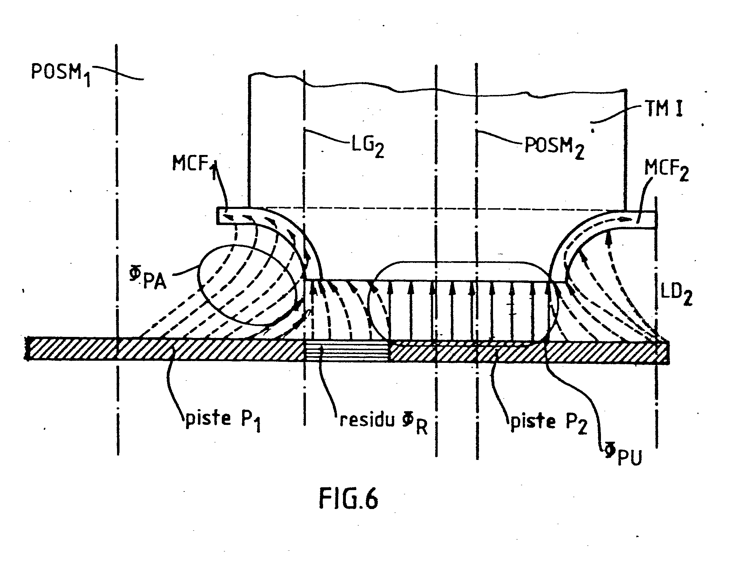

On considère la figure 6, qui représente le transducteur TMI
occupant la position $POSLG_2$ en regard de la piste $P_2$, cette
piste occupant la position $POSLD_2$.On voit que le flux parasite

$\phi_{PAR}$ est canalisé dans sa plus grande partie par les moyens de canalisation de flux $MCF_1$. On voit également qu'une petite partie du flux principal $\phi_{PU}$ est canalisé par les moyens $MCF_2$. Il n'en reste pas moins que dans ce cas, où le transducteur selon l'invention occupe la position la plus défavorable pour la lecture de la piste $P_2$, le rapport signal /bruit S/B est considérablement amélioré par rapport à celui obtenu par un transducteur selon l'art antérieur TMAP : en effet, si le signal utile S est légèrement diminué , le signal de bruit B est considérablement réduit de telle sorte que la diminution de S est inférieure à l'accroissement du facteur 1/B .

Il est clair que les solutions adoptées dans la demande de brevet déposée ce jour par la Compagnie demanderesse , simultanément avec la présente demande de brevet peuvent être appliquées au transducteur selon l'invention TMI décrit et revendiqué dans cette dernière ,la demande de brevet déposée conjointement avec la présente demande de brevet a pour titre : "Transducteur magnétique à entrefer de grande dimension variable pour la lecture et l'écriture des informations contenues sur un support magnétique" .

**0041409**

Revendications de brevet :

1. Transducteur de lecture et/ou d'écriture d'un support magnétique d'informations qui défile devant lui , les informations étant contenues à l'intérieur d'une pluralité de pistes comprenant :
- un circuit magnétique formé de deux pièces polaires séparées par un entrefer parallèle au support, dont la grande dimension est perpendiculaire au sens de défilement des informations d'une piste devant cet entrefer,
- un bobinage couplé magnétiquement à ce circuit magnétique,
- caractérisé en ce qu'il comprend des moyens associés aux pièces polaires , situés de chaque côté de l'entrefer considérés dans le sens de sa grande dimension , pour canaliser le flux magnétique émis par l'environnement immédiat de la piste du support d'enregistrement lu par le transducteur de telle sorte que ce dernier ne traverse pas ledit bobinage .

2. Transducteur selon la revendication 1, dans lequel les deux pièces polaires sont constituées par des couches minces magnétiques superposées et couplées magntiquement à une extrémité et disposées à l'autre extrémité voisine du support sensiblement perpendiculairement à celui-ci pour former l'entrefer , ces couches représentant un rétrécissement de largeur $LP_g$ au niveau de l'entrefer , qui définit des parois latérales des pièces polaires ayant la forme de surfaces latérales concaves caractérisé en ce que lesdits moyens de canalisation sont constitués par des couches minces magnétiques déposées sur lesdites parois latérales .

3. Transducteur selon la revendication 2, caractérisé en ce que lesdites couches magnétiques déposées sur les parois latérales des pièces polaires sont partiellement ou non couplées magnétiquement auxdites pièces polaires .

FIG.1a

FIG.1b

FIG.1c

FIG.1

FIG.2a

FIG.2b

FIG.2

PP$_3$

PP$_4$

TMAP

LP$_g$

largeur piste écriture LP$_E$

piste P

SM

FIG.3a

position

POS$_0$

TMAP

LP$_g$

position
POS$_1$

position
POS$_2$

P

FIG.3b

A

LP$_E$

signal de sortie S

5% XA

position

POS$_1$ TT$_1$

POS$_0$

TT$_2$ POS$_2$

FIG.3c

2x LP$_L$

FIG.3

FIG.4

FIG.5a

FIG.5b

FIG.5

FIG.5c

FIG.6

**Office européen des brevets**

**RAPPORT DE RECHERCHE EUROPEENNE**

| Catégorie | Citation du document avec indication, en cas de besoin, des parties pertinentes | Revendica-tion concernée |
|---|---|---|
| **DOCUMENTS CONSIDERES COMME PERTINENTS** | | |
| X | FR - A - 2 150 335 (I.B.M.)<br><br>* Page 3, lignes 6-14; page 4, lignes 19-29; page 5, lignes 1-8;;page 6,.lignes 12-20; page 8, lignes 1-29; page 11, lignes 11-17; figures 1a, 1b,1c,2,4a,4b * | 1,2 |
| X | PATENTS ABSTRACTS OF JAPAN, vol. 3, no. 98, 18 août 1979, page 123 E-131<br><br>& JP - A - 54 76217 (NIPPON DENKI K.K.) 18-06-1979<br><br>* En entier * | 1-3 |
| X | PATENTS ABSTRACTS OF JAPAN, vol. 3, no. 106, 7 septembre 1979, page 91 E 135<br><br>& JP - A - 54 83415 (NIPPON DENKI K.K.) 03-07-1979<br><br>* En entier * | 1 |
| X | PATENTS ABSTRACTS OF JAPAN, vol. 1, no. 20, 09 février .1978, page 11289 E 77<br><br>& JP - A - 52 138 915 (FUJITSU K.K.) 19-11-1977<br><br>* En entier * | 1 |
| X | IBM TECHNICAL DISCLOSURE BULLETIN vol. 2, no. 2, août 1959, page 35<br>Armonk, N.Y., U.S.A.<br>L.F. SHEW: "Increased density magnetic recording"     ./. | 1 |

**CLASSEMENT DE LA DEMANDE (Int. Cl.3)**

G 11 B 5/22
5/12

**DOMAINES TECHNIQUES RECHERCHES (Int. Cl.3)**

G 11 B 5

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
   document correspondant

Le présent rapport de recherche a été établi pour toutes les revendications

| Lieu de la recherche | Date d'achèvement de la recherche | Examinateur |
|---|---|---|
| La Haye | 07-07-1981 | FUX |

OEB Form 1503.1  06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| | * En entier * | | |
| | –– | | |
| | CH - A - 353 907 (TILLER) | 1 | |
| | * Revendication principale * | | |
| | –– | | |
| DA | FR - A - 2 297 475 (LAZZARI) | 1 | |
| | –––– | | |

DOMAINES TECHNIQUES RECHERCHES (Int. Cl. 3)

OEB Form 1503.2   06.78